# EUROPEAN PATENT APPLICATION

(11) **EP 4 593 411 A1**
(43) Date of publication of application: **30.07.2025**
(21) Application number: 22958737.3
(22) Date of filing: 13.09.2022
(51) Int. Cl.: H04Q 9/00

(54) **FACILITY EQUIPMENT MANAGEMENT DEVICE AND FACILITY EQUIPMENT MANAGEMENT METHOD**

(71) Applicant: Carrier Japan Corporation, Tokyo 141-0032 (JP)
(72) Inventor: IKEDA Takahisa, Fuji-shi, Shizuoka 416-8521 (JP)
(74) Representative: Gramm, Lins & Partner Patent- und Rechtsanwälte PartGmbB
(86) International application number: PCT/JP2022/034225
(87) International publication number: WO 2024/057403

(57) **Abstract**

An air conditioning management controller (20) as an equipment device management apparatus includes an initial communication processor (221), a periodic communication processor (222), a display information generator (224), and a display (242). The initial communication processor (221) executes communication establishment processing by initial communication with an equipment device to be managed for which communication has not been established. The periodic communication processor (222) periodically executes communication confirmation processing by periodic communication for confirming whether a communication state is normal with respect to an equipment device for which communication has been established by the communication establishment processing. When recognizing that a communication abnormality has occurred with the equipment device based on an execution result of the communication establishment processing and an execution result of the communication confirmation processing, the display information generator (224) generates display information for distinguishing whether the communication abnormality is an abnormality of the initial communication or an abnormality of the periodic communication. The display (242) displays the generated display information.

## Description

### TECHNICAL FIELD

An embodiment of the present invention relates to an equipment device management apparatus and an equipment device management method.

### BACKGROUND ART

A large number of equipment devices are installed in large buildings such as schools, hospitals, and office buildings. These equipment devices are configured to be able to communicate with an equipment management controller for an administrator to perform equipment management, and a management system is constructed. The administrator can check the operating state of each equipment device and operate the operation using the equipment management controller.

In order to control such a large number of equipment devices by the equipment management controller, bidirectional communication is performed between the equipment device and the equipment management controller. In such a system, since the installation location of the equipment management controller and the installation location of each equipment device are separated from each other, communication abnormality easily occurs between the equipment management controller and each equipment device. Therefore, communication confirmation is periodically performed between the controller and each device, and the controller detects the occurrence of communication abnormality between the devices based on the communication confirmation result.

### CITATION LIST

### PATENT LITERATURE

Patent Literature 1: Japanese Unexamined Patent Application Publication No. 2002-118564 A

### SUMMARY OF INVENTION

When such a communication abnormality occurs, it is conceivable to display the occurrence of the communication abnormality on a display screen of the controller.

However, the causes of the communication abnormality occurring between the equipment management controller and each equipment device include various causes such as a communication connection setting error, a communication line wiring error, disconnection, external noise, and power cutoff. Therefore, even when the administrator recognizes that the communication abnormality has occurred based on the information displayed on the equipment management controller, there is a problem that it takes a lot of time to identify the cause and perform the repair work.

The present invention has been made in view of the above circumstances, and an object of the present invention is to provide an equipment device management apparatus and an equipment device management method that provide, when a communication abnormality occurs with an equipment device to be managed, information for allowing an administrator to easily identify a cause of the communication abnormality.

In order to achieve the above object, an air conditioning management controller as an equipment device management apparatus includes an initial communication processor, a periodic communication processor, a display information generator, and a display. The initial communication processor executes communication establishment processing by initial communication with an equipment device to be managed for which communication has not been established. The periodic communication processor periodically executes communication confirmation processing by periodic communication for confirming whether a communication state is normal with respect to an equipment device for which communication has been established by the communication establishment processing. When recognizing that a communication abnormality has occurred with the equipment device based on an execution result of the communication establishment processing and an execution result of the communication confirmation processing, the display information generator generates display information for distinguishing whether the communication abnormality is an abnormality of initial communication or an abnormality of periodic communication. The display displays the generated display information.

### BRIEF DESCRIPTION OF DRAWINGS

[FIG. 1] FIG. 1 is an overall diagram illustrating an air conditioning system using an air conditioning management controller as an equipment device management apparatus according to one embodiment of the present invention.
[FIG. 2] FIG. 2 is a flowchart illustrating a flow of communication establishment processing and communication confirmation processing executed by the air conditioning management controller as the equipment device management apparatus according to one embodiment of the present invention.
[FIG. 3] FIG. 3(a) is an example of a monitoring control screen generated by the air conditioning management controller as the equipment device management apparatus according to one embodiment of the present invention when communication states with all air conditioners which are management targets are normal, and FIG. 3(b) is an example of a monitoring control screen when there is an air conditioner in which a communication abnormality has occurred among the air conditioners which are the management targets.
[FIG. 4] FIG. 4 is an example of a communication state display screen 200A generated by the air conditioning management controller as the equipment device management apparatus according to one embodiment of the present invention.
[FIG. 5] FIG. 5 is an example of a communication state display screen 200B generated by the air conditioning management controller as the equipment device management apparatus according to one embodiment of the present invention.
[FIG. 6] FIGS. 6(a) to 6(e) are examples of a communication state display screen 200C generated by the air conditioning management controller as the equipment device management apparatus according to one embodiment of the present invention.
[FIG. 7] FIG. 7 is an example of a communication state display screen 200D generated by the air conditioning management controller as the equipment device management apparatus according to one embodiment of the present invention.
[FIG. 8] FIG. 8 is an overall diagram illustrating an air conditioning system using an air conditioning management controller as an equipment device management apparatus according to another embodiment of the present invention.

### DESCRIPTION OF EMBODIMENTS

As one embodiment of the present invention, an air conditioning system including an air conditioner as an equipment device installed in a building and an air conditioning management controller that manages and controls the air conditioner as an equipment device management apparatus will be described.

### <Configuration of Air Conditioning System Using Equipment Device Management Apparatus According to One Embodiment>

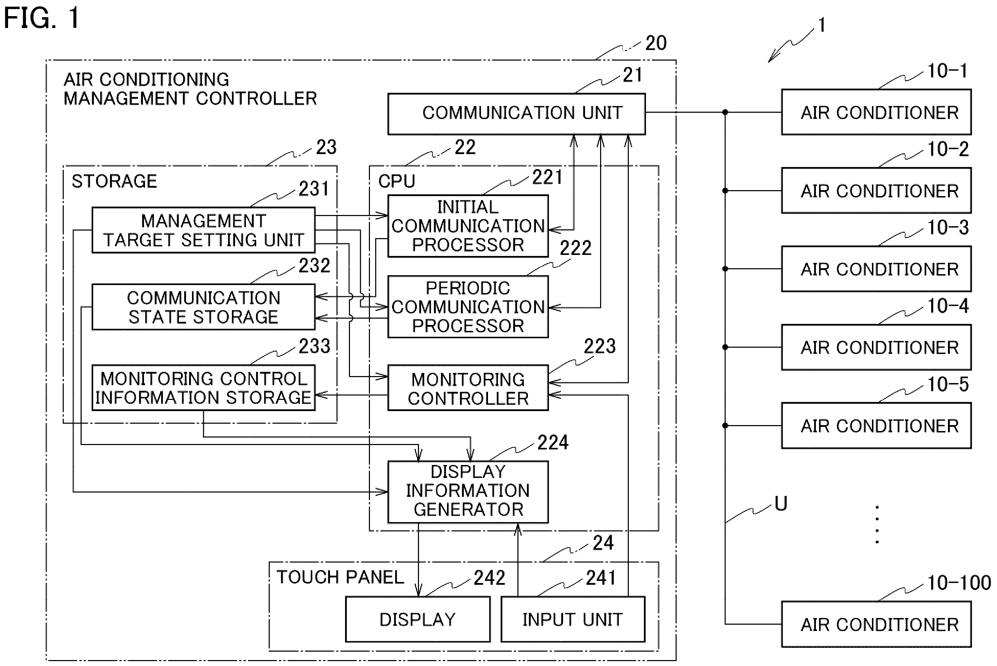

FIG. 1 is a block diagram illustrating a configuration of an air conditioning system 1 according to the present embodiment. The air conditioning system 1 includes a plurality of air conditioners 10-1 to 10-100 which are management targets installed in a building, and an air conditioning management controller 20 connected to the air conditioners 10-1 to 10-100. The air conditioners 10-1 to 10-100 may be indoor units or outdoor units. The air conditioning management controller 20 is operated by an administrator of the air conditioning system 1. The air conditioning management controller 20 and the air conditioners 10-1 to 10-100 are connected by a communication line U. The communication line U includes two bus communication lines, and the communication line U connected to the air conditioning management controller 20 branches halfway and is connected to all the air conditioners 10-1 to 10-100. Hereinafter, the air conditioners 10-1 to 10-100 may be collectively referred to as an air conditioner 10 for simplification of description. A commercial power source is individually connected to the air conditioning management controller 20 and each air conditioner 10.

The air conditioning management controller 20 includes a communication unit 21, a central processing unit (CPU) 22 as a central control unit, a storage 23, and a touch panel 24. The communication unit 21 communicates with each air conditioner 10 via the communication line U.

The CPU22 includes an initial communication processor 221, a periodic communication processor 222, a monitoring controller 223, and a display information generator 224. The CPU22 is provided with a peripheral circuit (not illustrated), and functions of the initial communication processor 221, the periodic communication processor 222, the monitoring controller 223, and the display information generator 224 are executed by the CPU22 reading and processing a program stored in a read only memory (ROM) therein. The initial communication processor 221 executes communication establishment processing by initial communication with the air conditioner 10 for which communication is not established. Specifically, the initial communication processor 221 performs establishing communication establishment processing with all the air conditioners 10 when the air conditioning management controller 20 is activated. The periodic communication processor 222 periodically performs communication confirmation processing (periodic communication) for confirming whether the communication state of the air conditioner for which communication has been established by the communication establishment processing is normal. The time interval of the periodic communication may be fixed or indefinite. In short, it is sufficient that the periodic communication processor 222 can sequentially execute the communication confirmation processing for all the air conditioners 10 at a certain time interval.

In the periodic communication, operation control information (operation instruction) for each air conditioner 10 may also be transmitted and received from the air conditioning management controller 20. For example, when a specific air conditioner 10 is caused to start heating, the air conditioning management controller 20 adds a heating operation instruction to the periodic communication and performs transmission to the air conditioner 10. Meanwhile, each air conditioner 10 adds operating state information regarding the operation status, for example, information such as an operation mode during stop or operation, a set temperature, and an air volume to a reply to the periodic communication, and performs transmission to the air conditioning management controller 20. In this way, the air conditioning management controller 20 can grasp the current operating state of all the air conditioners 10 based on the reply information.

The monitoring controller 223 acquires the operating state information of the air conditioner 10 described above at predetermined time intervals by periodic communication, and transmits the operation control information for controlling the operation of each air conditioner 10 input from the input unit 241 to each air conditioner 10. As for the operation instruction from the air conditioning management controller 20 to each air conditioner 10, it may be important to make a quick response in each air conditioner 10. For this reason, the operation instruction may be immediately transmitted from the air conditioning management controller 20 to the air conditioner 10 every time the operation control information is generated not by the periodic communication but by the communication as needed.

The display information generator 224 generates monitoring control screen information as display information for displaying the monitoring control information including the operating state information and the operation control information of each air conditioner 10 obtained or instructed by the monitoring controller 223.

In addition, the display information generator 224 generates communication state display screen information as the display information for displaying the information indicating the communication state with each air conditioner 10 based on the execution result of the communication establishment processing and the execution result of the communication confirmation processing. At this time, when recognizing that a communication abnormality has occurred with any of the air conditioners, the display information generator 224 generates the communication state display screen information by distinguishing whether the corresponding communication abnormality is an initial communication abnormality that has occurred in a state where communication has never been established after activation, or a periodic communication abnormality in which communication has been established at least once after activation, in other words, communication has become impossible after the initial communication has been established.

The storage 23 including a random access memory (RAM), a nonvolatile memory, and the like includes a management target setting unit 231, a communication state storage 232, and a monitoring control information storage 233. The management target setting unit 231 stores preset address information and the like for each of all the air conditioners 10 which are the management targets. The address information of each air conditioner 10 is stored in the management target setting unit 231 by reading a setting file stored in a personal computer or the like by an equipment provider at the time of installation or before installation of the air conditioning management controller 20. The setting file includes various device information of each air conditioner 10 in addition to the address information of all the air conditioners 10 connected in advance. The communication state storage 232 stores the execution result of the communication establishment processing executed by the initial communication processor 221 and the execution result of the communication confirmation processing executed by the periodic communication processor 222. The monitoring control information storage 233 stores the operation control information transmitted by the monitoring controller 223 and the acquired operating state information.

The touch panel 24 includes the input unit 241 and the display 242. The input unit 241 can input operation information by the administrator. The display 242 formed of a color liquid crystal screen displays the display information generated by the display information generator 224.

### <Operation of Air Conditioning System Using Equipment Device Management Apparatus According to One Embodiment>

Next, an operation of the air conditioning system 1 according to the present embodiment will be described. When the air conditioning management controller 20 is activated, the initial communication processor 221 sequentially executes the communication establishment processing by the initial communication for each air conditioner 10 via the communication unit 21 using the address information set in the management target setting unit 231. Thereafter, the periodic communication processor 222 executes periodic communication confirmation processing of confirming whether or not the communication state is normal, together with confirmation of the operation state and transmission of the operation instruction to each air conditioner 10 for which communication has been established, at predetermined time intervals via the communication unit 21 using the address information similarly set in the management target setting unit 231.

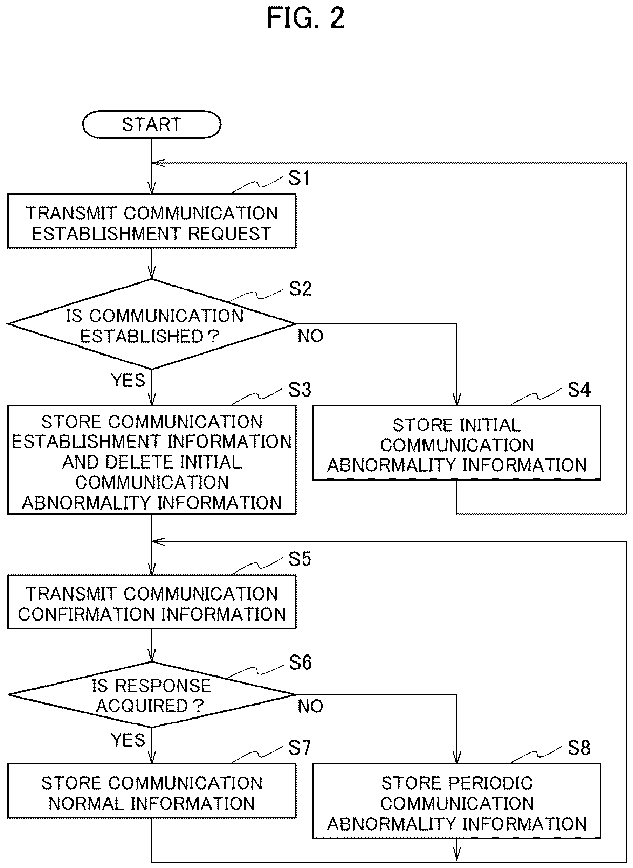

FIG. 2 is a flowchart illustrating a flow of communication establishment processing executed by the initial communication processor 221 and communication confirmation processing executed by the periodic communication processor 222 for a predetermined air conditioner. Here, processing executed by the initial communication processor 221 and the periodic communication processor 222 on the air conditioner 10-1 will be described as an example. The processing of FIG. 2 is sequentially executed for all the air conditioners 10 under the control of the air conditioning management controller 20, that is, set in the management target setting unit 231.

When the air conditioning management controller 20 is activated (start), the initial communication processor 221 transmits the communication establishment request, which is initial communication, to the specific air conditioner 10-1 (hereinafter, the air conditioner 10-1 will be described as an example) via the communication unit 21 (S1). When the communication between the communication unit 21 and the air conditioner 10-1 is established based on the transmitted communication establishment request (YES in S2), the initial communication processor 221 stores the communication establishment information indicating that the communication with the air conditioner 10-1 is established in the communication state storage 232, and when the initial communication abnormality information has been previously stored, this is deleted (S3).

Here, when the communication between the communication unit 21 and the air conditioner 10-1 has not been established (NO in S2), the initial communication processor 221 generates initial communication abnormality information indicating that the communication with the air conditioner 10-1 has not been established, and stores the initial communication abnormality information in the communication state storage 232 (S4). Subsequently, the process returns to Step S1, and the initial communication processor 221 repeats transmission of the communication establishment request to the air conditioner 10-1 at predetermined time intervals until communication is established (S1, S2, S4).

When the communication between the communication unit 21 and the air conditioner 10-1 is established by the initial communication processor 221 repeating the transmission of the communication establishment request (YES in S2), the initial communication processor 221 generates the communication establishment information and stores the communication establishment information in the communication state storage 232 as described above, and deletes the stored initial communication abnormality information (S3).

In the initial communication, after the communication with the air conditioner 10-1 is established, the periodic communication processor 222 transmits communication confirmation information for confirming whether the communication state is normal to the air conditioner 10-1 via the communication unit 21 at a predetermined timing (S5). When the communication unit 21 acquires the response information from the air conditioner 10-1 to the transmitted communication confirmation information (YES in S6), the periodic communication processor 222 generates communication normal information indicating that the communication state with the air conditioner 10-1 is normal, and stores the communication normal information in the communication state storage 232 (S7). At this point, when the periodic communication abnormality information is previously stored, the periodic communication abnormality information is erased.

Here, when the communication unit 21 has not been able to acquire the response information from the air conditioner 10-1 (NO in S6), the periodic communication processor 222 generates periodic communication abnormality information indicating that an abnormality has occurred in communication with the air conditioner 10-1, and stores the periodic communication abnormality information in the communication state storage 232 (S8).

After the processing of Step S7 or Step S8, the process returns to Step S5, and thereafter, while the air conditioning management controller 20 is operating, the periodic communication processor 222 repeats and executes the processing of Step S5 and subsequent Steps at predetermined time intervals.

In short, when communication is not established in the initial communication, the initial communication abnormality information is stored, and the communication establishment request for the initial communication is repeated (S1, S2, S4). Therefore, even in a case where there is the air conditioner 10 for which the initial communication cannot be established at first, when the communication abnormality is corrected, the initial communication is established (YES in S2), the initial communication abnormality information is erased (S3), and the process proceeds to the periodic communication processing (S5 and subsequent Steps).

Meanwhile, when the communication is established in the initial communication (YES in S2), thereafter, the processing of the periodic communication (S5 and subsequent Steps) is repeated every predetermined period without returning to the processing of the initial communication (S1).

In the communication confirmation processing described above, instead of storing the periodic communication abnormality information when the response information cannot be acquired with respect to the transmitted communication confirmation information, the periodic communication processor 222 may continuously repeat the transmission of the communication confirmation information, and in a case where the response information cannot be continuously acquired a predetermined number of times (for example, 5 times), the state of the periodic communication abnormality may be determined and the periodic communication abnormality information may be stored. As a result, it is possible to avoid issuing a communication abnormality due to a temporary failure.

In a state where the communication establishment processing and the communication confirmation processing are being executed as described above, the monitoring controller 223 performs the acquisition processing of the operating state information and the transmission processing of the operation control information with the air conditioner with which communication is normally established. The monitoring controller 223 stores the acquired operating state information and the transmitted operation control information in the monitoring control information storage 233.

In addition, in the air conditioning system 1 in operation, when the system configuration is changed due to replacement of individual air conditioners, addition of air conditioners, or the like, it is desirable to temporarily reset the processing of the air conditioning management controller 20 illustrated in FIG. 2, to erase all of the initial communication abnormality information, the communication establishment information, the periodic communication abnormality information, the communication normal information, and the operating state information, and to start again from the establishment of the initial communication in Step S1. Since it is necessary to newly read the setting file in such a change of the system configuration, it is most convenient to reset the processing at the timing of overwriting and storing the setting file in the management target setting unit 231 by reading the new setting file.

Since the air conditioning management controller 20 is an equipment device, once the power is turned on, the power is not turned off thereafter in general. Therefore, the processing of the air conditioning management controller 20 may be reset and the initial communication abnormality information, the communication establishment information, the periodic communication abnormality information, the communication normal information, and the operating state information may be erased by turning off the power, so that the processing may be started again from the establishment of the initial communication in Step S1 when the power is turned on again. According to this method, when the installation confirmation is performed by installing the equipment device constituting the air conditioning system at the time of introduction of the air conditioning system, the power supply of the air conditioning management controller 20 is appropriately turned on and off during the wiring connection work and the confirmation of the setting contents in each air conditioner, so that the installation work can be performed while confirming the defective portion.

The operations of the initial communication processor 221, the periodic communication processor 222, and the like illustrated in FIG. 2 are sequentially performed on all the connected air conditioners 10 from the illustrated air conditioner 10-1 to the last air conditioner 10-100.

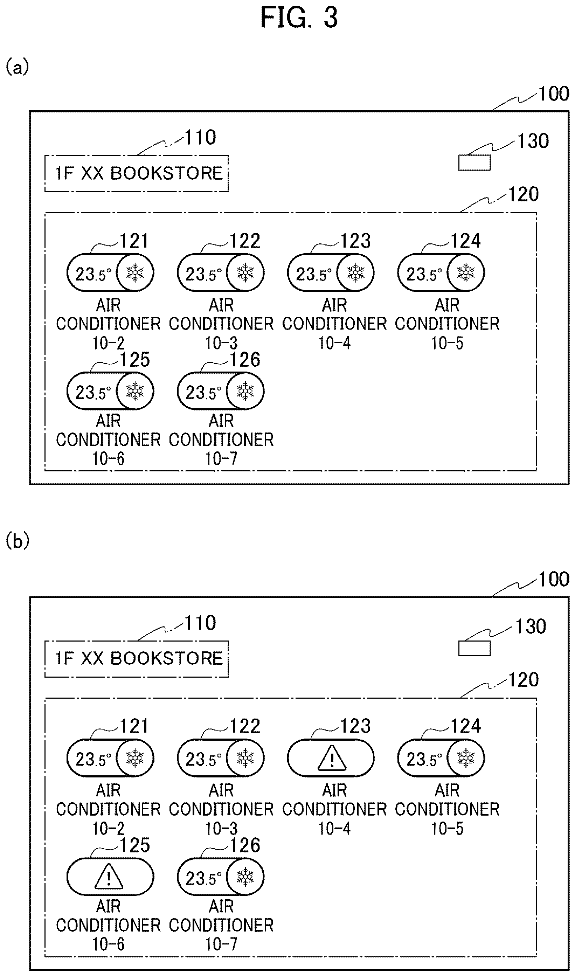

Next, information displayed on the display 242 during operation of the air conditioning management controller 20 will be described. At the normal time, the display information generator 224 generates information of the monitoring control screen 100 as illustrated in FIG. 3(a) at predetermined time intervals (for example, every 5 seconds) based on the information stored in the monitoring control information storage 233. The generated information of the monitoring control screen 100 is displayed on the display 242.

The monitoring control screen 100 includes an area name display 110 that displays information on the management target area designated by the operation of the administrator, an air conditioner icon display 120 that displays an air conditioner icon corresponding to each air conditioner in the designated management target area, and a display switching button 130. The display switching button 130 is an operation unit for performing an operation of switching display contents on the display 242 between the monitoring control screen 100 and a communication state display screen 200 to be described later.

In the monitoring control screen 100 of FIG. 3(a), the management target area name "1F XX bookstore" designated by the operation of the administrator is displayed in the area name display 110. In the air conditioner icon display 120, air conditioner icons 121 to 126 respectively corresponding to the air conditioners 10-2 to 10-7 installed in the corresponding management target area are displayed.

Each of the air conditioner icons 121 to 126 display identification information, a figure indicating an operation mode included in the acquired latest operating state information, and a set temperature of each of the corresponding air conditioners 10-2 to 10-7. Incidentally, in the display example of FIG. 3(a), it is indicated that all the air conditioners 10-2 to 10-7 are in the cooling operation by the snow crystal mark (right side) indicated in the air conditioner icon 121 to 126. In addition, the fact that the set temperature of each of the air conditioners 10-2 to 10-7 in the operation is 23.5°C is also displayed in the air conditioner icon 121 to 126 (left side). In FIG. 3(a), since there is no display of abnormality, it can be understood that the monitoring control screen 100 is displayed when the communication state between the air conditioning management controller 20 and each of the air conditioners 10-2 to 10-7 is normal.

When the administrator performs a predetermined operation on one of the displayed air conditioner icons 121 to 126, the monitoring controller 223 generates predetermined control information and transmits the control information to the corresponding air conditioner. For example, when the administrator performs a swipe operation toward the left side from the area where the figure indicating the operation mode on the right side is displayed on the air conditioner icon 121, the monitoring controller 223 generates control information for bringing the air conditioner into the stopped state, and transmits the control information to the corresponding air conditioner 10-1. The transmission of the control information based on such an operation may be performed within periodic communication, or may be individually transmitted to the corresponding air conditioner 10 each time the control information is generated. The air conditioner 10-1 stops the operation based on the control information acquired from the air conditioning management controller 20.

When the air conditioner 10-1 is in the stop state, the monitoring controller 223 detects this and stores information indicating that the operation of the air conditioner 10-1 is stopped in the monitoring control information storage 233. The display information generator 224 causes the air conditioner icon 121 in the monitoring control screen 100 being displayed to be switched to a state indicating a stop state, for example, a state in which the luminance is lowered and displayed.

FIG. 3(b) illustrates the monitoring control screen 100 when the communication abnormality occurs between the air conditioning management controller 20 and the air conditioner 10-3 and between the air conditioning management controller 20 and the air conditioner 10-5. Here, the air conditioner icon 123 corresponding to the air conditioner 10-3 in which the communication abnormality has occurred and the air conditioner icon 125 corresponding to the air conditioner 10-5 are displayed with a mark "!" indicating the abnormal state.

Here, when the administrator performs a predetermined operation, for example, a long press operation for 3 seconds or more on the display switching button 130 in order to confirm detailed information on communication abnormality, the display information generated by the display information generator 224 is switched from the monitoring control screen 100 to the communication state display screen 200.

The display information generator 224 generates the communication state display screen 200 indicating the communication state with each of the air conditioners 10-1 to 10-100 based on the information set in the management target setting unit 231 and the information stored in the communication state storage 232.

As a specific example of the communication state display screen 200 generated by the display information generator 224, communication state display screens 200A to 200D will be described below with reference to the drawings.

### [Communication State Display Screen 200A]

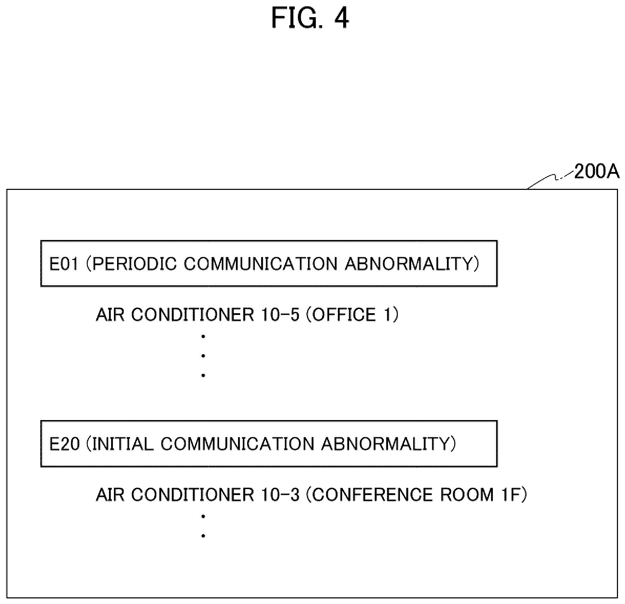

FIG. 4 is a diagram illustrating a communication state display screen 200A generated by the display information generator 224. On the communication state display screen 200A, the identification information of the air conditioner 10 in which the communication abnormality has occurred is displayed separately for the initial communication abnormality and the periodic communication abnormality.

Specifically, in the communication state display screen 200A, information of the air conditioner 10-5 (office 1) or the like in which the periodic communication abnormality occurs is displayed below the identification information "E01" indicating the periodic communication abnormality, and information of the air conditioner 10-3 (conference room 1F) or the like in which the initial communication abnormality occurs is displayed below the identification information "E20" indicating the initial communication abnormality.

As described above, the identification information of the air conditioner 10 in which the communication abnormality has occurred in the air conditioning system 1 is displayed separately for the initial communication abnormality and the periodic communication abnormality, so that the administrator can recognize which air conditioner has the initial communication abnormality or the periodic communication abnormality.

In addition, when the communication abnormality that has occurred is an initial communication abnormality, the administrator can predict that the cause of the abnormality is a disconnection, a power failure of the air conditioner, or a setting error of the air conditioner. In addition, when the communication abnormality that has occurred is a periodic communication abnormality, since the initial communication has been established once, it is obvious that the cause of the communication abnormality is not at least a setting error of the air conditioner. Furthermore, since the probability of disconnection of the communication line U is extremely low under a situation other than under construction, the administrator can predict that the cause of the abnormality is a high probability of collapse of the signal waveform due to superimposition of electrical noise at a specific connection wiring portion in the communication line U. The administrator can take an appropriate and efficient response to the communication abnormality based on the cause predicted as described above. Incidentally, as a measure against the electrical noise, it is conceivable to insert a noise filter by finding a noise generation source or change the routing of the communication line U at the corresponding portion.

### [Communication State Display Screen 200B]

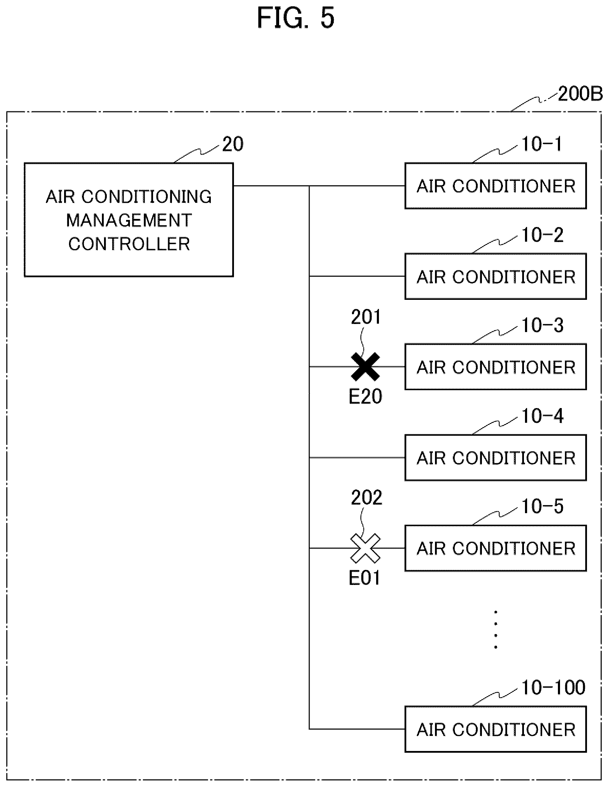

FIG. 5 is a diagram illustrating another communication state display screen 200B generated by the display information generator 224. On the communication state display screen 200B, a wiring connection configuration diagram of the air conditioning system 1 is displayed, and a portion where a communication abnormality occurs in the configuration diagram is marked.

This mark has different visibility between the initial communication abnormality and the periodic communication abnormality in the corresponding communication abnormality. In FIG. 5, a black cross mark 201 and text information "E20" indicating that the abnormality is the initial communication abnormality are attached at a portion where the initial communication abnormality occurs, specifically, between the air conditioning management controller 20 and the air conditioner 10-3. A white cross mark 202 and text information "E01" indicating that the abnormality is the periodic communication abnormality are attached at a portion where the periodic communication abnormality occurs, specifically, between the air conditioning management controller 20 and the air conditioner 10-5.

As described above, different marks and text information are displayed at the portion where the initial communication abnormality has occurred and the portion where the periodic communication abnormality has occurred in the configuration diagram of the air conditioning system 1, so that the administrator can recognize at which position in the air conditioning system 1 the communication abnormality has occurred, and whether the communication abnormality has occurred is the initial communication abnormality or the periodic communication abnormality. In addition, the administrator can predict the cause of the communication abnormality based on the recognized content similarly to the case of the communication state display screen 200A, and efficiently take a response to the communication abnormality.

### [Communication State Display Screen 200C]

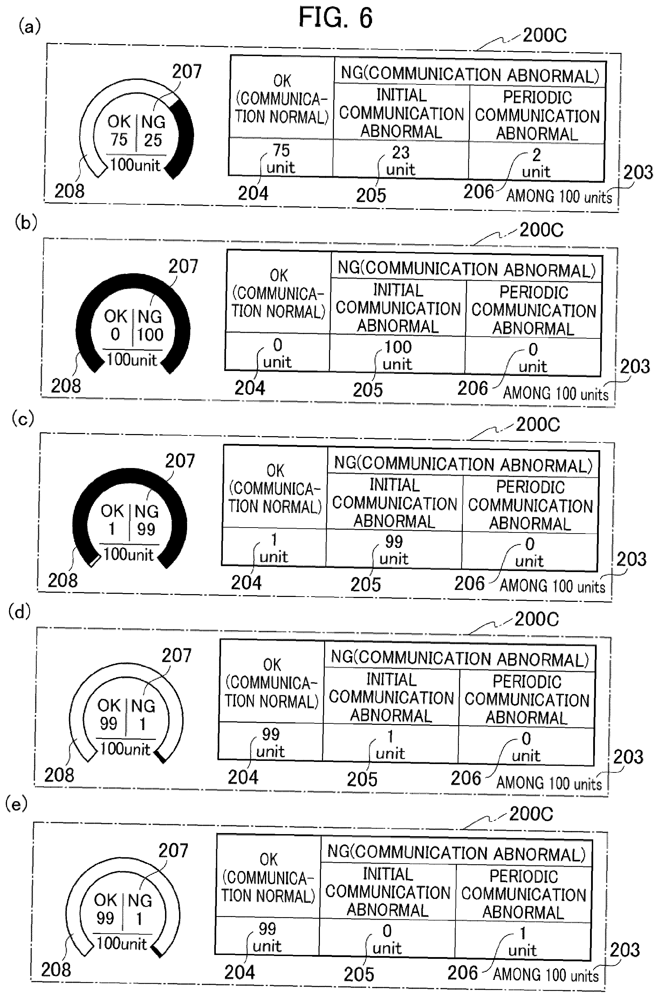

FIGS. 6(a) to 6(e) are diagrams illustrating other communication state display screens 200C generated by the display information generator 224. On the communication state display screen 200C, information 203 indicating the total number of air conditioners which are the management targets, information 204 indicating the number of air conditioners whose communication state is normal, information 205 indicating the number of air conditioners in which the initial communication abnormality has occurred, and information 206 indicating the number of air conditioners in which the periodic communication abnormality has occurred are displayed in a table format. Further, the left side of the table on the same screen includes information 207 indicating the number of air conditioners in which the communication abnormality has occurred (the number of air conditioners in which the initial communication abnormality has occurred + the number of air conditioners in which the periodic communication abnormality has occurred), and a graph 208 indicating a ratio between the number of air conditioners in which the communication state is normal among the air conditioners which are the management targets and the number of air conditioners in which the communication abnormality has occurred.

The graph 208 has a shape in which a part of the lower portion of the circular graph is cut out, and an area (region) corresponding to the ratio of the number of normal air conditioners is allocated from the lower right end side to the left end side, and an area (region) corresponding to the ratio of the number of air conditioners in which the communication abnormality occurs is allocated from the lower left end side to the lower right end side. In the graph 208, the regions to which the respective ratios are assigned are displayed in different colors. In the display example of FIG. 6, the region to which the ratio of the number of normal air conditioners is assigned is white, and the region to which the ratio of the number of air conditioners in which the communication abnormality has occurred is assigned is black. However, other colors that can be easily distinguished from each other may be used so that the areas can be distinguished from each other. At the center of the circular graph, the number of normal air conditioners, the number of communication abnormal air conditioners, and the total number of air conditioners connected below them, that is, set in the management target setting unit 231 are displayed as numbers. This screen is effectively used at the time of trial run when the air conditioning management controller 20 and the air conditioner 10 are installed.

FIG. 6(a) illustrates the communication state display screen 200C in a case where, among the 100 air conditioners which are the management targets, that is, all the air conditioners connected to the air conditioning management controller 20, the number of air conditioners in the normal communication state is 75, the number of air conditioners in which the initial communication abnormality has occurred is 23, and the number of air conditioners in which the periodic communication abnormality has occurred is 2.

In this case, since a communication abnormality has occurred in a plurality of air conditioners among the air conditioners which are management targets, the administrator can determine that an abnormality has occurred at some point between the air conditioners, and there is a possibility that the cause of the communication abnormality is in a boundary portion between an area where the air conditioner in which communication with the air conditioning management controller 20 is normally established is installed and an area where the air conditioner in which the communication abnormality has occurred is installed.

FIG. 6(b) illustrates the communication state display screen 200C in a case where, among the 100 air conditioners which are management targets, the number of air conditioners in a normal communication state is 0, the number of air conditioners in which the initial communication abnormality has occurred is 100, and the number of air conditioners in which the periodic communication abnormality has occurred is 0.

In this case, since communication with all the air conditioners 10-1 to 10-100 which are management targets has not been established, the administrator can determine that there is a high possibility that there is an abnormality in the device body of the air conditioning management controller 20, an error (setting error) in the address information and various device information of the air conditioner 10 stored in the management target setting unit 231, or a cause of the communication abnormality around the communication line U before the branching from the air conditioning management controller 20.

FIG. 6(c) illustrates the communication state display screen 200C in a case where, among the 100 air conditioners which are management targets, the number of air conditioners in a normal communication state is 1, the number of air conditioners in which the initial communication abnormality has occurred is 99, and the number of air conditioners in which the periodic communication abnormality has occurred is 0.

In this case, the administrator can determine that there is a possibility that there is a cause of the communication abnormality at a boundary portion between the area where the air conditioner in which the communication with the air conditioning management controller 20 is normally established is installed and the area where the air conditioner in which the communication abnormality occurs is installed.

FIG. 6(d) illustrates the communication state display screen 200C when, among the 100 air conditioners which are management targets, the number of air conditioners in the normal communication state is 99, the number of air conditioners in which the initial communication abnormality has occurred is 1, and the number of air conditioners in which the periodic communication abnormality has occurred is 0.

In this case, the administrator can determine that the communication abnormality of one air conditioner may be caused by a setting error of data such as an address of the air conditioner, a mistake in wiring connected only to the air conditioner, a disconnection, or a power cutoff of the air conditioner.

FIG. 6(e) illustrates the communication state display screen 200C in a case where, among the 100 air conditioners which are management targets, the number of air conditioners in the normal communication state is 99, the number of air conditioners in which the initial communication abnormality has occurred is 0, and the number of air conditioners in which the periodic communication abnormality has occurred is 1.

In this case, since the initial communication is established at the time of activation of the air conditioner in which the communication abnormality occurs and then the communication is disconnected, the administrator can determine that the cause of the communication abnormality of the air conditioner may be external noise on the communication line U near the air conditioner.

As described above, according to the display method of FIG. 6, the administrator can easily recognize the ratio between the number of air conditioners in the normal communication state and the number of air conditioners in which the communication abnormality occurs among the air conditioners which are management targets by visually recognizing the graph 208 in each state, and can quickly obtain a clue to investigate the cause of the communication abnormality.

### [Communication State Display Screen 200D]

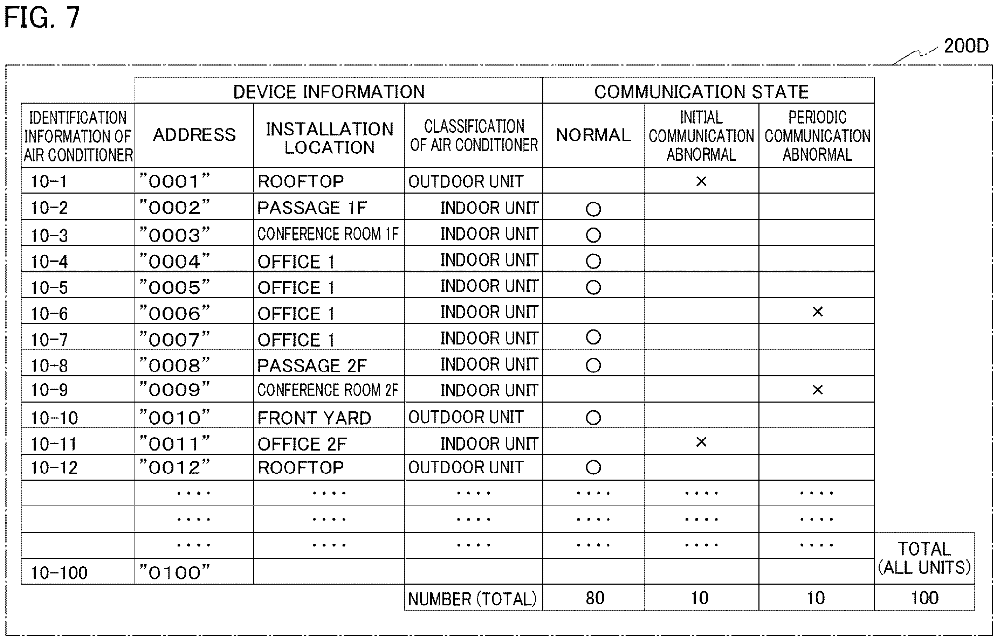

FIG. 7 is a diagram illustrating a communication state display screen 200D generated by the display information generator 224. The communication state display screen 200D is a display screen in the form of a list illustrating the information on the communication abnormality in more detail, and is information illustrating, in the form of a table, identification information (10-1 to 10-100) for each air conditioner 10 which is the management target, address information ""0001 "" to ""0100"", information indicating the installation location, information indicating the classification (indoor unit or outdoor unit) of the air conditioner, and the information ("normal", "initial communication abnormal", "periodic communication abnormal") indicating the communication state, the information indicating the total number of air conditioners which are management targets, the information indicating the number of air conditioners in the normal communication state, the information indicating the number of air conditioners in which the initial communication abnormality has occurred, and the information indicating the number of air conditioners in which the periodic communication abnormality has occurred.

The identification information (10-1 to 10-100) for each air conditioner 10 which is the management target, the address information ʺʺ0001ʺʺ to ""0100"", the information indicating the installation location, and the information indicating the classification (indoor unit or outdoor unit) of the air conditioner are information read into the air conditioning management controller 20 from a setting file or the like at the time of installation or before installation of the air conditioning management controller 20 and stored in the management target setting unit 231.

FIG. 7 indicates that, for example, the air conditioner 10 whose address information is "0001" is an outdoor unit installed on the rooftop. For this outdoor unit, an initial communication abnormality is indicated as the communication state. **In** addition, the bottom row of the table displays, as a summary of the communication state, that there are 80 normal air conditioners, 10 initial communication abnormal air conditioners, and 10 periodic communication abnormal air conditioners, and that the number of air conditioners to be connected, that is, the total number of air conditioners to be connected is 100.

By displaying the information indicating the communication state of each air conditioner 10 and the information related thereto in a table format in this manner, the administrator can easily recognize the communication state of each air conditioner 10, and can predict and cope with the cause of the communication abnormality that has occurred, similarly to the case of displaying the communication state display screen 200C.

The display information generator 224 generates the above-described communication state display screen 200A, 200B, 200C, or 200D at predetermined time intervals (for example, every 5 seconds), and updates the display on the display 242.

According to the above embodiment, when a communication abnormality occurs between the air conditioning management controller 20 in the air conditioning system 1 and any one of the air conditioners 10, whether the communication abnormality is an initial communication abnormality or a periodic communication abnormality is distinguished and presented to the air conditioning management controller 20, whereby the administrator can easily identify the cause of the communication abnormality.

### [Configuration Example of Air Conditioning System of Another Embodiment]

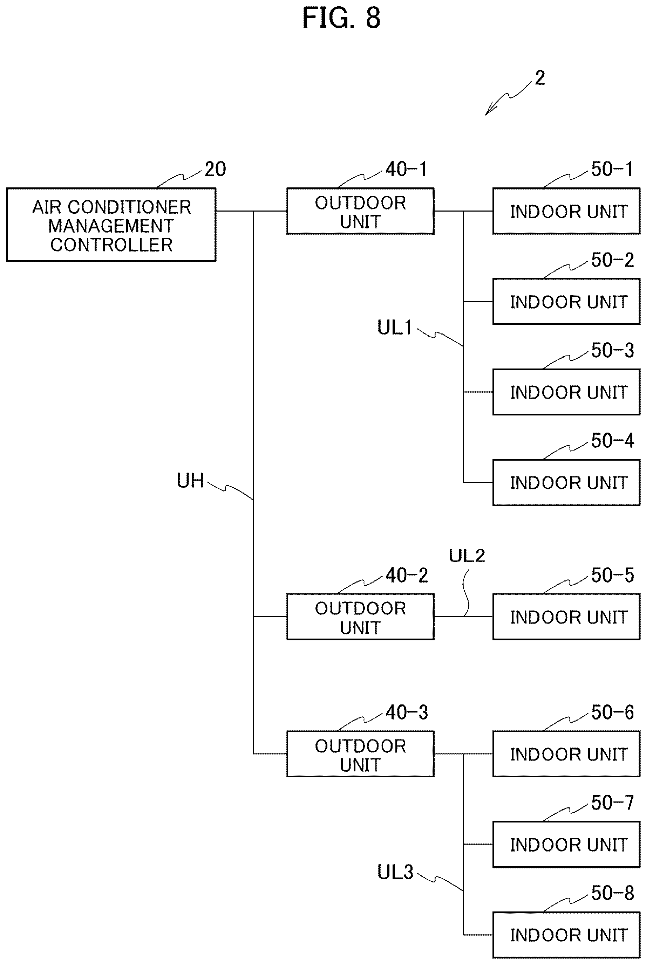

**In** the embodiment described above, the example of the air conditioning system 1 in which the air conditioning management controller 20 and all the air conditioners 10 are connected to the same communication line U and exchange information with each other by the bus communication method has been described. However, the present invention is not limited to this configuration. As in the air conditioning system 2 illustrated in FIG. 8, only the outdoor units 40-1, 40-2, ... of the air conditioner 10 may be directly connected to an upper bus communication line UH connected to the air conditioning management controller 20, and the indoor units connected through the refrigerant pipe, that is, the indoor units in the same refrigeration cycle system may be connected to the outdoor units 40-1, 40-2, ..., through a lower bus communication line UL.

For example, in the air conditioning system 2 of FIG. 8, three outdoor units 40-1 to 40-3 are connected to the air conditioning management controller 20 by the bus communication line UH, and among them, the outdoor units 40-1 and 40-3 are configured as a multi-type in which a plurality of indoor units 50 are connected. Four indoor units 50-1 to 50-4 are connected to the outdoor unit 40-1 through the lower communication line UL1, and three indoor units 50-6 to 50-8 are connected to the outdoor unit 40-3 through the lower communication line UL3. The outdoor unit 40-2 is a so-called single type, and only one indoor unit 50-5 is connected through the lower communication line UL2. Hereinafter, the outdoor units in the air conditioning system 2 are also collectively referred to as the outdoor unit 40, the indoor units are also collectively referred to as the indoor unit 50, and the lower communication lines are also collectively referred to as the communication line UL.

In such an air conditioning system configuration, the air conditioning management controller 20 exchanges information with the indoor unit 50 via the outdoor unit 40. At this time, the outdoor unit 40 may simply function as a communication repeater between the air conditioning management controller 20 and the indoor unit 50, or the information of the indoor unit 50 may be obtained in advance by the outdoor unit 40 via the downstream communication line UL, and the response of the initial communication and the periodic communication from the air conditioning management controller 20 to the indoor unit 50 may be returned by the outdoor unit 40 collectively with the information of the indoor unit 50 obtained in advance.

Generally, in the initial communication between the air conditioning management controller 20 and the air conditioner 10, detailed information such as acquisition of the format and model number information of the air conditioner 10, which is not performed in the periodic communication performed during operation, is exchanged. Therefore, in the above-described embodiment, the initial communication and the periodic communication have been described separately, but the initial communication and the periodic communication may be executed with the same communication content. That is, the periodic communication until the communication is first established between the air conditioning management controller 20 and each air conditioner 10 may be treated as the initial communication.

Although the embodiments of the present invention have been described above, the embodiments are presented as examples, and are not intended to limit the scope of the invention. This novel embodiment can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

### REFERENCE SIGNS LIST

1: air conditioning system; 10-1 to 10-100: air conditioner; 20: air conditioning management controller; 21: communication unit; 22: CPU; 23: storage; 24: touch panel; 40: outdoor unit; 50: indoor unit; 100: monitoring control screen; 110: area name display; 120: air conditioner icon display; 121 to 126: air conditioner icon; 200, 200A to 200D: communication state display screen; 201, 202: cross mark; 203: information indicating total number of air conditioners which are management targets; 204: information indicating number of air conditioners in normal communication state; 205: information indicating number of air conditioners in which initial communication abnormality has occurred; 206: information indicating number of air conditioners in which periodic communication abnormality has occurred; 207: information indicating number of air conditioners in which communication abnormality has occurred; 208: graph illustrating ratio between number of air conditioners in normal communication state and number of air conditioners in which communication abnormality has occurred; 221: initial communication processor; 222: periodic communication processor; 223: monitoring controller; 224: display information generator; 231: management target setting unit; 232: communication state storage; 233: monitoring control information storage; 241: input unit; 242: display; U, UH, UL: communication line

## Claims

1. An equipment device management apparatus comprising:
an initial communication processor configured to execute communication establishment processing by initial communication with an equipment device to be managed for which communication has not been established;
a periodic communication processor configured to periodically execute communication confirmation processing by periodic communication for confirming whether a communication state is normal with respect to the equipment device for which communication has been established by the communication establishment processing;
a display information generator configured to, upon recognizing that a communication abnormality has occurred with the equipment device based on an execution result of the communication establishment processing and an execution result of the communication confirmation processing, generate display information for distinguishing whether the communication abnormality is an abnormality of the initial communication or an abnormality of the periodic communication; and
a display configured to display the display information generated by the display information generator.

2. The equipment device management apparatus according to claim 1, wherein the equipment device to be managed is provided in a plurality, and
the display information generator is further configured to generate the display information including information on a number of equipment devices in which the abnormality of the initial communication occurs.

3. The equipment device management apparatus according to claim 1, wherein the equipment device to be managed is provided in a plurality, and
the display information generator is further configured to generate the display information including information on a number of equipment devices in which the abnormality of the periodic communication occurs.

4. The equipment device management apparatus according to claim 2 or 3, wherein the display information generator is further configured to generate the display information including information on a total number of the equipment devices to be managed.

5. The equipment device management apparatus according to claim 2, wherein the display information generator is configured to generate the display information so as to simultaneously display information on the number of the equipment devices in which the abnormality of the initial communication has occurred and information on a total number of the equipment devices to be managed.

6. The equipment device management apparatus according to claim 3, wherein the display information generator is further configured to generate the display information including information on a total number of equipment devices in which communication abnormality has currently occurred, the total number being obtained by adding the number of the equipment devices in which the abnormality of the periodic communication has occurred to a number of equipment devices in which the abnormality of the initial communication has occurred.

7. The equipment device management apparatus according to claim 5, wherein the display information generator is configured to generate the display information so as to simultaneously display information on the number of the equipment devices in which the abnormality of the initial communication has occurred, information on a number of equipment devices in which the abnormality of the periodic communication has occurred, and information on the total number of the equipment devices to be managed.

8. The equipment device management apparatus according to claim 7, wherein the display information generator is configured to generate the display information including information indicating a ratio between a number of air conditioners in a normal communication state and a number of air conditioners in a communication abnormality among air conditioners to be managed.

9. The equipment device management apparatus according to claim 5 or 7, wherein
the display has a liquid crystal screen, and
the display information generator is configured to display the generated display information on a single screen of the liquid crystal screen.

10. The equipment device management apparatus according to claim 1, wherein the equipment device to be managed is provided in a plurality, and
the display information generator is configured to generate the display information including information that distinguishes whether the communication abnormality is the abnormality of the initial communication or the abnormality of the periodic communication for each equipment device for which the display information generator has recognized that the communication abnormality has occurred.

11. The equipment device management apparatus according to claim 10, wherein the display information generator is further configured to generate the display information including information indicating that the communication state is normal for each equipment device for which the display information generator has recognized that the communication state is normal, based on the execution result of the communication establishment processing and the execution result of the communication confirmation processing.

12. An equipment device management method performed by an equipment device management apparatus, the equipment device management method comprising:
executing communication establishment processing with an equipment device to be managed by initial communication;
periodically executing communication confirmation processing of confirming whether a communication state is normal by periodic communication with respect to the equipment device for which communication has been established by the communication establishment processing; and
upon recognizing that a communication abnormality has occurred with the equipment device based on an execution result of the communication establishment processing and an execution result of the communication confirmation processing, generating and displaying display information for distinguishing whether the communication abnormality is an abnormality of initial communication or an abnormality of periodic communication.
